Europäisches Patentamt

European Patent Office

Office européen des brevets

(19)

(11) Veröffentlichungsnummer : **0 052 152 B1**

# (12) EUROPÄISCHE PATENTSCHRIFT

(45) Veröffentlichungstag der Patentschrift :
**18.01.84**

(21) Anmeldenummer : **80107054.1**

(22) Anmeldetag : **14.11.80**

(51) Int. Cl.$^3$ : **A 23 K   1/175**, A 23 K   1/08,
A 23 C 21/10, A 23 C   9/152

(54) Für Menschen und Tiere geeignetes, Spurenelemente enthaltendes Konzentrat, ein Verfahren zu seiner Herstellung und seine Verwendung.

(43) Veröffentlichungstag der Anmeldung :
**26.05.82 Patentblatt 82/21**

(45) Bekanntmachung des Hinweises auf die Patenterteilung : **18.01.84 Patentblatt 84/03**

(84) Benannte Vertragsstaaten :
**AT BE CH DE FR GB IT LI NL SE**

(56) Entgegenhaltungen :
**DE-A- 2 034 692**
**DE-A- 2 412 601**
**DE-A- 2 705 433**
**DE-B- 1 692 427**
**JOURNAL OF AGRICULTURAL AND FOOD CHEMISTRY, Band 27, Nr. 4, Juli-August 1979, Seiten 687-690, Washington D.C., U.S.A. A. FERRETTI et al.: " Utilization of whey/lactose as an industrial binder "**

(73) Patentinhaber : **Schanze, Rudolf**
**Friedenstrasse 43**
**D-8034 Unterpfaffenhofen (DE)**

(72) Erfinder : **Schanze, Rudolf**
**Friedenstrasse 43**
**D-8034 Unterpfaffenhofen (DE)**

(74) Vertreter : **Kraus, Walter, Dr. et al**
**Patentanwälte Dres. Kraus & Weisert Irmgardstrasse 15**
**D-8000 München 71 (DE)**

**0 052 152**

## Für Menschen und Tiere geeignetes, Spurenelemente enthaltendes Konzentrat, ein Verfahren zu seiner Herstellung und seine Verwendung

Die Erfindung betrifft ein Verfahren zur Herstellung eines für Menschen und Tiere geeigneten, Spurenelemente enthaltenden Konzentrats oder Nährstoffs, das als solches direkt gegessen bzw. verfüttert werden kann. Bevorzugt wird es jedoch als Nahrungsmittelzusatz oder Futtermittelzusatz oder als Zusatz zu Arzneimitteln verwendet. Es kann als Fertigfabrikat oder als Halbfabrikat vorliegen.

Nahrungs- und Futtermittel sind Träger der sogenannten Nährstoffe, die der menschliche und tierische Körper zum Aufbau und zur Erhaltung benötigt.

In den unendlich vielen Nahrungs- und Futtermitteln, aus denen sich die Kostformen zusammensetzen, finden sich immer nur die gleichen Nährstoffe. Diese sind die eigentlich wesentlichen Bestandteile einer Kost. Ihre Anwesenheit in optimaler Form und Menge macht eine vollwertige, gesunderhaltende Nahrung aus. Eine Kost ist dann vollwertig, wenn sie den Energie- und Eiweißbedarf des Organismus deckt, d. h. die genügende Menge an Kalorien sowie alle notwendigen Nährstoffe in der richtigen Menge, im richtigen Verhältnis und in ausnutzbarer Form enthält.

Ihrer Aufgabe nach lassen sich die Nährstoffe in drei Gruppen einordnen :

(1) Energielieferanten sind in erster Linie Fett und Kohlenhydrate ; bei ungenügender Zufuhr dieser Nährstoffe auch Eiweiß.

(2) Aufbaustoffe werden zum Aufbau neuer Körpersubstanz, besonders beim Wachstum, benötigt. In die Gruppe der Aufbaustoffe gehören vor allem Eiweiß und die meisten Mineralstoffe.

(3) Ergänzungs- und Reglerstoffe sind Nährstoffe, deren Aufgaben man nicht unter die unter (1) und (2) genannten Funktionen einordnen kann ; sie sind aber für die Aufrechterhaltung eines geordneten Stoffwechsels unentbehrlich. Die Vitamine, Mineralstoffe und Spurenelemente fallen in diese Gruppe.

Man unterscheidet die Mineralstoffe, bei denen sich der Tagesbedarf in der Größenordnung von g bewegt, und die Spurenelemente, bei denen er sich in der Größenordnung von mg oder μg bewegt.

Die anorganischen Nährstoffe sind notwendig :

(1) als Bauelemente, z. B. Ca, P, Fe ;
(2) zur Aufrechterhaltung des osmotischen Drucks, z. B. Na, K, Cl ;
(3) als Bestandteile bzw. Aktivatoren von Fermenten, z. B. Fe, Mg, Mn, Cu, Mo ;
(4) als Bestandteile von Vitaminen, z. B. Co ;
(5) als Bestandteile bzw. Aktivatoren von Hormonen, z. B. J und Zn ;
(6) für sonstige Stoffwechselaufgaben, z. B. Cl (Magensäure), Ca (Blutgerinnung), P (Kohlenhydrat-Stoffwechsel und Energieübertragung), F (Resistenz der Zähne).

In der folgenden Tabelle ist eine Übersicht über den Bedarf an einigen anorganischen Nährstoffen eines Erwachsenen gegeben.

### Bedarf an anorganischen Nährstoffen/Tag

| | |
|---|---|
| Calcium | 1,0 g |
| Phosphor | 1,0 g |
| Eisen | 12 mg |
| Kochsalz | 2-4 g |
| Kalium | 2,0 g |
| Magnesium | 0,3 g |
| Kupfer | 3-6 mg |
| Zink | 10 mg |
| Mangan | 2-3 mg |
| Fluor | 1 mg |
| Jod | 0,1-0,15 mg |

Die Spurenelemente, die sich regelmäßig in der Nahrung und im Körper finden, kann man nach ihrer physiologischen Bedeutung in drei Gruppen einordnen : solche, deren Lebenswichtigkeit erwiesen ist (essentielle Spurenelemente) ; solche, die trotz bisweilen vorhandener physiologischer Funktion (beispielsweise F) nicht mit Sicherheit als lebenswichtig gelten können (akzidentelle Spurenelemente) ; und sog. Begleitelemente. Als lebenswichtig erwiesen haben sich Co, Cu, Mn, Zn, J, Si, Mo ; als fraglich lebenswichtig Al, As, Cr, Au, F, Ni, Ag, Ti, Sn ; als Begleitelement B, Br, Sc, Sr, Rh.

Die Einteilung der Spurenelemente schwankt etwas. So gelten nach Untersuchungen der Weltgesundheitsorganisation beim Menschen als Spurenelemente solche, denen insbesondere katalytische Aufgaben bei lebenswichtigen Enzymprozessen zukommen, wie die Elemente Zn, Mg, Co, Cu, Cr, Sr und Mo. Sie kommen in Mengen von einigen Gramm (Mg ca. 20-25 g, Zn ca. 30 g bis wenigen Milligramm, Mo ca. 5 mg) im menschlichen Organismus vor.

2

Ein Mangel an Spurenelementen führt bei Mensch und Tier zu Mangelerscheinungen, insbesondere bei hochleistenden Tieren treten trotz einer leistungsorientiert berechneten und mit Spurenelementen ausgestatteten Ration in zunehmendem Maße manifeste Störungen auf, z. B. eine schlechtere Produktion, avitale Nachkommen, Leistungsdepression usw.

Die Supplementation mit den bekannten, bisher verwendeten, chemisch definierten Spurenelementsalzen von Verbindungen des Zn, Fe, Cu, Co, Mn, J usw. mit anorganischen Säuren der Elemente F, Cl, P usw. zeigt zwar einerseits spezifische und positive Wirkungen, andererseits ist die Verabreichung solcher Salze aus geschmacklichen Gründen mit Schwierigkeiten verbunden und die Partikel solcher Salze bewirken, daß Schwierigkeiten bei der Resorption und Unverträglichkeit auftreten. Zudem ist es fast unmöglich, eine ausgeglichene Supplementation zu erreichen, da die verfügbaren Spurenelement-Salzmischungen immer nur maximal 6 bis 8 Spurenelemente enthalten.

Ein weiterer Nachteil, der bei der Verwendung der bekannten Spurenelement-Salzmischungen auftritt, ist der, daß, wenn solche Spurenelement-Salzmischungen zu Nahrungsmitteln zugegeben werden, die Spurenelement-Salze mit anderen Nahrungsbestandteilen Reaktionen eingehen. Zum Beispiel reagieren die Buntmetalle, wie Kobalt, mit Fett. Durch die Metalle wird außerdem die Vitaminaktivität verringert usw.

In der DE-A 29 06 375 wird eine Tierfutterzusammensetzung aus wenigstens einem Futtermittel und Zementofenflugasche beschrieben. Als Futtermittel werden alle bekannten Futterstoffe für Tiere, wie synthetische Nahrungsmittel oder natürliche Nahrungsmittel, verwendet. Die Zementofenflugasche wird im allgemeinen aus elektrostatischen Abscheidern in den Kaminrauchklappen von Zementfabriken extrahiert.

Zementofenflugasche enthält kaum Spurenelemente, dafür hauptsächlich Alkalien, Calcium und Silicium. Bei dem bekannten Verfahren eignet sich das erhaltene Produkt daher nur für Tiere, und es wird festen Nahrungsmitteln beigemischt.

In der DE-B 2 034 692 wird ein Verfahren zur Herstellung von Konzentraten essentieller Spurenelemente beschrieben. Bei diesem bekannten Verfahren verwendet man flüssige Molkeprodukte und setzt diesen 1 bis 8 Gew.-%, bezogen auf die milchzuckerfreie Trockenmasse des angewandten Molkereiprodukts, einer Spurenelementmischung bei. Diese bekannten Konzentrate besitzen den Nachteil, daß sie nur die üblichen 6 bis maximal 8 Spurenelemente enthalten und die Versorgung von Mensch und Tier an allen essentiellen Spurenelementen nicht gewährleistet ist. Im allgemeinen verwendet man bei diesem bekannten Verfahren auch keine Gemische aus Spurenelementen, sondern einzelne Spurenelemente, beispielsweise Kupfersulfat, Eisen- oder Zinkverbindung. Das Konzentrat kann auch nicht direkt als Futter verwendet werden, sondern es wird Futter beigemischt.

In der DE-A-2 412 601 wird ein Mittel zur Verbesserung der Qualität und Leistungsfähigkeit von Tieren beschrieben, welches Flugasche enthält. Gemäß den bevorzugten Ausführungsformen wird die Flugasche Vormischungen oder dem Futter beigesetzt. Dabei ist jedoch keine hohe Gabe an Flugasche möglich, da die Flugasche bitter schmeckt. Enthält das Futter zu viel Flugasche, wird das Futter von den Tieren nicht angenommen.

Der vorliegenden Erfindung liegt die Aufgabe zugrunde, einen Nährstoff oder ein Konzentrat zur Verfügung zu stellen, mit dem eine Versorgung von Spurenelementen in einem breiten Spektrum möglich ist und mit dem eine Versorgung mit mehr als bisher üblichen 6 bis 8 Spurenelementen möglich wird.

Erfindungsgemäß sollen weiterhin Beschränkungen, die durch den Geschmack in den bekannten Spurenelement-Konzentraten vorhanden sind, vermieden werden und die Partikelgröße der Konzentrate soll auf solche Weise variet werden, daß die bisherigen Unverträglichkeiten vermieden werden. Das erfindungsgemäße Konzentrat soll weiterhin gut von Mensch und Tier resorbiert werden.

Das Verfahren zur Herstellung des erfindungsgemäßen Konzentrats soll einfach sein, das erhaltene Konzentrat soll einfach zu handhaben sein und leicht Nahrungsmitteln und Kraftfuttern beigemischt werden können, wo es sich homogen verteilen soll. In dem erfindungsgemäßen Konzentrat sollen die Spurenelemente auf solche Weise vorhanden sein, daß sie mit den Nahrungsbestandteilen keine Reaktionen mehr eingehen und im menschlichen Organismus keine Störungen hervorrufen.

Gegenstand der Erfindung ist ein Verfahren zur Herstellung eines für Menschen und Tiere geeigneten, Spurenelemente enthaltenden Konzentrats, das dadurch gekennzeichnet ist, daß man zu sauren, flüssigen Nachprodukten der Milchverarbeitung mit einem Gehalt von über 9 % Asche in der Trockensubstanz und einem pH-Wert unter 5,5 Pflanzenasche und/oder anorganische Bestandteile enthaltende Kohlerückstände in einer Menge zusetzt, die ausreicht, den pH-Wert auf einen Wert über 6 zu erhöhen, gegebenenfalls Spurenelemente und/oder Mineralstoffe zusetzt, das angereicherte, flüssige oder pastenförmige Produkt trocknet und gegebenenfalls mahlt oder granuliert. Ggf. kann man nach der Erhöhung des pH-Wertes Kohlehydrate und/oder Gummen zusetzen. Die Erfindung betrifft weiterhin das bei dem Verfahren erhaltene Konzentrat sowie ein für Menschen und Tiere geeignetes, Spurenelemente enthaltendes Konzentrat, das dadurch gekennzeichnet ist, daß es, bezogen auf die Trockenmasse,

20 bis 75 Gew.Teile Trockensubstanz, die aus einem flüssigen Nachprodukt der Milchverarbeitung mit einem Gehalt von über 9 % Asche in der Trockensubstanz stammt,

8 bis 55 Gew.Teile Pflanzenasche und/oder anorganische Bestandteile enthaltende Kohlerückstände,

**0 052 152**

0 bis 25 Gew.Teile Spurenelementmischung,
0 bis 70 Gew.Teile Mineralstoffe und
0 bis 15 Gew.Teile Kohlenhydrate und/oder Gummen enthält.

Die Erfindung betrifft weiterhin die Verwendung des erfindungsgemäßen Konzentrats als Nahrungs- oder Futtermittel oder als Ergänzung für Nahrungs- und Futtermittel.

Der Anmelder hat überraschenderweise gefunden, daß die oben beschriebenen Nachteile der bekannten Spurenelementergänzungen und -konzentrate vermieden werden, wenn man Pflanzenasche und/oder anorganische Bestandteile enthaltende Kohlerückstände zu mineralreichen und sauren Nachprodukten der Milchverarbeitung zugibt und das erhaltene Gemisch trocknet.

Die bei den erfindungsgemäßen Verfahren verwendete Pflanzenasche unterscheidet sich von der gemäß der DE-A-29 06 375 verwendeten Zementofenflugasche in ihrer Alkalinität. Wie aus dem beigefügten Analysenvergleich erkennbar ist, enthält die Zementofenflugasche mehr als 50 % CaO, während die Pflanzenasche davon weniger als 3 % enthält.

Analysenvergleich zwischen Zementofenflugasche und Pflanzenasche

| Bestandteile | Zementofenflugasche (%) | Pflanzenasche (%) |
|---|---|---|
| $SiO_2$ | 13,5 | 20,3 |
| $Al_2O_3$ | 3,4 | 3,8 |
| $Fe_2O_3$ | 3,8 | 1,07 |
| CaO | 52,6 | 2,79 |
| S | 1,1 | |
| $Na_2O$ | 1,6 | 0,674 |
| $K_2O$ | 3,3 | 0,843 |

Man gewinnt bei dem erfindungsgemäßen Verfahren ein Pulver oder Granulat, welches eine Versorgung mit zahlreichen Spurenelementen — fast sämtlich benötigten Spurenelementen — möglich macht.

Das erfindungsgemäße Produkt schmeckt überraschenderweise nicht bitter, so daß es von Menschen und Tieren leicht angenommen wird. Überraschenderweise wurde gefunden, daß die in dem erfindungsgemäßen Konzentrat enthaltenen Spurenelemente mit anderen Nahrungsbestandteilen keine Reaktion eingehen.

Die Teilchengröße des erfindungsgemäßen Produktes ist so, daß es von Menschen und Tieren sehr leicht resorbiert wird, so daß die Resorptionsschwierigkeiten der bekannten Konzentrate vermieden werden. Man nimmt an, daß die leichte Resorption der Spurenelemente dadurch erfolgt, daß die Spurenelemente an die Milchnebenprodukte gebunden sind.

Das Verfahren zur Herstellung des erfindungsgemäßen Produkts ist leicht und einfach durchzuführen und wirtschaftlich. Das erfindungsgemäße Konzentrat läßt sich in sämtlichen Lebensmitteln, Genußmitteln und Futtermitteln homogen verteilen und ist auch nicht durch spurenelementfeindliche Substanzen verunreinigt.

Die bei dem erfindungsgemäßen Verfahren verwendete Pflanzenasche entstammt biologischen Organismen. Die Asche hat daher den Vorteil, daß sie keine lebenshemmenden Spurenstoffe, d. h. Stoffe enthält, die lebenden Organismen schaden.

Bei dem erfindungsgemäßen Verfahren wird Pflanzenasche verwendet. In der Pflanzenasche findet sich ein breites Spektrum von Spurenelementen. Als Pflanzenaschen werden insbesondere solche Aschen verwendet, die geologisch älteren Epochen entstammen und anfallen, wenn bestimmte Kohlearten, z. B. Steinkohle, unter bestimmten Bedingungen, d. h. bei Temperaturen unterhalb der völligen Versinterung, verbrannt werden. Die übliche technische Bezeichnung derartiger Pflanzenaschen heißt z. B. « Steinkohlenflugasche » oder allgemein « Flugasche ». Über Steinkohlenflugasche oder Flugasche liegen zahlreiche Untersuchungen vor. Unter anderem wurde nachgewiesen, daß diese selbst bei höchster Dosierung an Tiere (z. B. 3 kg/Tag und Rind) unbedenklich sind und ohne Schädigung verfüttert werden können.

Anhand vorliegender Atomarabsorptionsdiagramme läßt sich feststellen, daß diese Aschen fast sämtliche Elemente des periodischen Systems enthalten, wobei überrascht, daß der Anteil an schädlichen Stoffen, z. B. Pb, Hg, Th, Cd usw., so gering ist, daß er weit unter dem heute festgelegten Rahmen der Tolerierbarkeit liegt.

Überraschend weisen diese Aschen jedoch relativ hohe Anteile solcher Spurenelemente auf, die bisher als chemische Spurenelemente unüblich waren oder nicht beschaffbar waren, von denen jedoch bekannt ist, daß sie innerhalb wichtiger und funktioneller Enzymgruppen, die bei hohen Tierleistungen in zunehmendem Maße benötigt werden, eine obligate und aktivierende Rolle spielen. Dies betrifft insbesondere solche Elemente, wie Ti, Cr, Li, Ba, Br, Ni, und Elemente aus der Gruppe der Lanthaniden.

Im folgenden wird die Analyse der Pflanzenasche, bestimmt durch Atomabsorption, aufgeführt. Die

4

einzelnen Elemente sind nach dem periodischen System geordnet, wobei die Gruppen als Gru und die Periodennummer als Per bezeichnet werden. In der Tabelle bedeuten weiterhin OZ die Ordnungszahl, AG das Atomgewicht und ppm den Gehalt in mg/kg.

Analyse der Pflanzenasche

| Gru | Per | Element | OZ | AG | ppm |
|-----|-----|---------|-----|------|------|
| I | 2 | Lithium | 3 | 6,939 | 42 |
|  | 3 | Natrium | 11 | 22,9898 | 5 000 |
| A | 4 | Kalium | 19 | 39,102 | 7 000 |
|  | 5 | Rubidium | 37 | 85,47 | 140 |
|  | 6 | Cäsium | 55 | 132,905 | 20 |
| IB | 4 | Kupfer | 29 | 63,546 | 200 |
|  | 5 | Silber | 47 | 107,868 | 0,5 |
| II | 2 | Beryllium | 4 | 9,0122 | 8 |
|  | 3 | Magnesium | 12 | 24,312 | 8 000 |
| A | 4 | Calcium | 20 | 40,08 | 20 000 |
|  | 5 | Strontium | 38 | 87,62 | 2 000 |
|  | 6 | Barium | 56 | 137,34 | 2 400 |
| II | 4 | Zink | 30 | 65,37 | 260 |
| B | 5 | Cadmium | 48 | 112,40 | 0,7 |
|  | 6 | Quecksilber | 80 | 200,59 | 0,01 |
| III | 2 | Bor | 5 | 10,811 | 230 |
|  | 3 | Aluminium | 13 | 26,9815 | 40 000 |
|  | 4 | Scandium | 21 | 44,956 | 3,7 |
|  | 5 | Yttrium | 39 | 88,905 | 100 |
|  | 6 | Lanthanoide | | | |
|  |  | Lanthan | 57 | 138,91 | 40 |
|  |  | Cer | 58 | 140,12 | 100 |
|  |  | Praseodym | 59 | 140,907 | 38 |
|  |  | Neodym | 60 | 144,24 | 55 |
|  |  | Promethium | 61 | (147) | |
|  |  | Samarium | 62 | 150,35 | 11 |
|  |  | Europium | 63 | 151,96 | 3 |
|  |  | Gadolinium | 64 | 157,25 | 13 |
|  |  | Terbium | 65 | 158,924 | 2-3 |
|  |  | Dysprosium | 66 | 162,50 | 7 |
|  |  | Holmium | 67 | 164,930 | 1,2 |
|  |  | Erbium | 68 | 167,26 | 3,4 |
|  |  | Thulium | 69 | 168,934 | 3,0 |
|  |  | Ytterbium | 70 | 173,04 | 5,5 |
|  |  | Lutetium | 71 | 174,97 | 0,5 |
| IV | 2 | Kohlenstoff | 6 | 12,01115 | ———O |
|  | 3 | Silicium | 14 | 28,086 | 190 000 |
| A | 4 | Titan | 22 | 47,90 | 1 600 |
|  | 5 | Zirkonium | 40 | 91,22 | 300 |
|  | 6 | Hafnium | 72 | 178,49 | 9 |
| B | 4 | Germanium | 32 | 72,59 | 2,4 |
|  | 5 | Zinn | 50 | 118,69 | 60 |
|  | 6 | Blei | 82 | 207,19 | 15 |
| V | 2 | Stickstoff | 7 | 14,0067 | ———O |
|  | 3 | Phosphor | 15 | 30,9783 | 8 000 |
| A | 4 | Vanadium | 23 | 50,942 | 50 |
|  | 5 | Niob | 41 | 92,906 | 60 |
|  | 6 | Tantal | 73 | 180,948 | 0,5 |
| VB | 4 | Arsen | 33 | 74,9216 | 22 |
|  | 5 | Antimon | 51 | 121,75 | 4,5 |
|  | 6 | Wismut | 83 | 208,980 | 0,5 |
| VI | 2 | Sauerstoff | 8 | 16 | ———O |
|  | 3 | Schwefel | 16 | 32,064 | 4 000 |

**0 052 152**

Analyse der Pflanzenasche (Fortsetzung)

| Gru | Per | Element | OZ | AG | ppm |
|-----|-----|---------|-----|--------|--------|
| A | 4 | Chrom | 24 | 51,996 | 110 |
| | 5 | Molybdän | 42 | 95,94 | 36 |
| | 6 | Wolfram | 74 | 183,85 | 6 |
| VI | 4 | Selen | 34 | 78,96 | 0,3 |
| B | 5 | Tellur | 52 | 127,60 | 0,2 |
| VII | 2 | Fluor | 9 | 18,9984 | 150 |
| | 3 | Chlor | 17 | 35,453 | 420 |
| A | 4 | Mangan | 25 | 54,9380 | 400 |
| | 5 | Technetium | 43 | (99) | |
| | 6 | Rhenium | 75 | 186,2 | |
| VII | 4 | Brom | 35 | 79,904 | 0,7 |
| B | 5 | Jod | 53 | 126,9044 | 0,2 |
| | 6 | Astatin | 85 | (210) | |
| VIII | 4 | Eisen | 26 | 55,847 | 15 000 |
| | | Kobalt | 27 | 58,9332 | 7 |
| | | Nickel | 28 | 58,71 | 50 |
| VIII | 5 | Ruthenium | 44 | 101,07 | |
| | | Rhodium | 45 | 102,905 | |
| | | Palladium | 46 | 106,4 | |
| III | | Actinoide | | | |
| A | 7 | Thorium | 90 | 232,038 | 40 |
| | | Uran | 92 | 238,03 | 30 |
| III | 4 | Gallium | 31 | 69,72 | 20 |
| B | 5 | Indium | 49 | 114,82 | |
| | 6 | Thallium | 81 | 204,37 | 0,8 |

Bevorzugt werden die Pflanzenaschen als Staub verwendet. Die Pflanzenaschen reagieren neutral im Gegensatz zu den Spurenelementsalzen chemischer Herkunft. Sie besitzen keinen metallischen Geschmack und sind somit vom Geschmack wie von der Partikelgröße her besonders günstig. Pflanzenasche wird allgemein aus organischen Materialien und Pflanzen hergestellt.

Bei dem erfindungsgemäßen Verfahren kann man anstelle der Pflanzenasche auch Rückstände verwenden, die bei der Aufbereitung der Kohle anfallen und die anorganischen Bestandteile der Kohle enthalten.

Beispielsweise kann man Kohlestaub fein mahlen, mit Wasser flotieren. Dabei trennt sich die Kohle in anorganische und organische Bestandteile. Den bei einer solchen Flotation erhaltenen, die anorganischen Anteile enthaltenden Rückstand kann man bei dem erfindungsgemäßen Verfahren ebenfalls verwenden.

Im folgenden soll der Einfachheit halber der Ausdruck Flugasche oder Pflanzenasche auch solche Rückstände der Kohle mitumfassen.

Ein weiterer Bestandteil des erfindungsgemäßen Konzentrats sind saure Nachprodukte der Milchverarbeitung. Unter sauren Nachprodukten der Milchverarbeitung werden solche Milchabfall- und -nebenprodukte verstanden, die spezielle Zucker sowie organische Säuren und rekationsfähige Eiweißverbindungen enthalten und als Fraktion und Nebenprodukte bei der Milchverarbeitung anfallen. Solche Produkte fallen z. B. bei der Lactoseherstellung und der Elektrodialyse von Milch und Milchprodukten an. Man kann auch andere Nachprodukte, welche teilenteiweißt, jedoch mineralreich sind, verwenden. Als weitere Beispiele können Permeate aus der Ultrafiltration, Abgänge aus der Elektrodialyse in Vorlage und stark saure Konzentrate aus der Lactoseherstellung genannt werden. Jedoch nicht Koppelprodukte aus dem Einsatz von Ionenaustauschern. Solche Milchnebenprodukte besitzen einen pH-Wert unter 5,5, vorzugsweise einen pH-Wert im Bereich von 3,0 bis 5,0 und besonders bevorzugt im Bereich von 3,9 bis 4,7. Der Trockengehalt solcher Nachprodukte der Milchverarbeitung kann variieren. Erfindungsgemäß werden jedoch solche Produkte verwendet, die mindestens 9 % Asche in der Trockensubstanz enthalten.

Gibt man die Flugasche zu dem Milchnebenprodukt, so verteilt sie sich in dem Milchnebenprodukt einheitlich. Die Menge an zugegebener Flugasche kann beliebig variiert werden. Sie beträgt 8 bis 55 Gew.Teile, vorzugsweise 15 bis 50 und besonders bevorzugt 25 bis 45 Gew.Teile, bezogen auf trockene Flugasche und Trockenmasse des Endprodukts.

Bei der Zugabe der Flugasche muß man intensiv rühren. Man arbeitet bei Zimmertemperatur, gegebenenfalls bei leicht erhöhter Temperatur, je nachdem wie das Milchnebenprodukt anfällt. Die Reaktionstemperaturen können im Bereich von 10 bis 50 °C, vorzugsweise im Bereich von 25 bis 45 °C,

6

liegen. Nachdem die Flugasche zu dem Milchnebenprodukt zugegeben wurde, läßt man das Reaktionsgemisch einige Zeit stehen. Man beobachtet eine allmähliche Ansteigung des pH-Wertes. Verwendet man z. B. ein Milchnebenprodukt mit einem Ausgangs-pH-Wert von 3,9 und gibt dann Flugasche zu, so tritt in kurzer Zeit eine Erhöhung des pH-Wertes auf 4,5-5,0-5,5-5,8 bis 6,2 ein. Dieser Prozeß ist bei einem Gewichtsverhältnis Trockenmasse aus Milchnebenprodukt zu Trockenmasse aus Pflanzenasche von 1 : 3 bis 3 : 1 fast übereinstimmend in 8 h, bei etwas höherer Temperatur (von 25 bis 45 °C) in spätestens 6 h abgeschlossen.

Die Flugasche wird in solcher Menge zugegeben, daß der pH-Wert auf einen Wert über 6 steigt.

Die oben beschriebenen Milchprodukte, die erfindungsgemäß als Ausgangsmaterial verwendet werden, wie eingedickte Konzentrate aus der Milchzuckerei, Ultrafiltration und Elektrodialyse, verhalten sich bei einer Trocknung auf einer Walze und einem Sprühturm nicht besonders günstig. Sie neigen im Sprühverfahren über den Turm zum Aufbau von trocknungsstörenden Belägen in der Sprühzone und im Turmkonus. Im Walzenverfahren ergeben sich, abgesehen von schlechter Flächenleistung, typische Einrollungen und zähplastische Würste beim Abgang vom Messer. Beide Erscheinungen reichen bis zum Zusammenbruch des Trocknungsverfahrens. Die gewonnenen Endprodukte sind stark hygroskopisch und durch die schwierige Herstellung unwirtschaftlich.

Überraschenderweise hat sich gezeigt, daß sich die Konzentration der Milchprodukte, die mit Pflanzenasche vermengt sind, bei der Trocknung völlig anders verhält. Diese Reaktionsprodukte lassen sich wesentlich besser und mit hoher Leistung trocknen als die reinen Milchnebenprodukte. Nach der Trocknung und längerer Lagerung besitzen sie zwar eine gewisse Hygroskopizität, die jedoch wesentlich geringer ist als die des Produktes, das man bei der Trocknung der reinen Milchnebenprodukte erhält.

Gemäß einer bevorzugten Ausführungsform gibt man zu dem Gemenge aus Milchnebenprodukt und Asche noch Kohlenhydrate und/oder Gummen. Als Kohlenhydrate werden bevorzugt Kartoffelprodukte, wie Kartoffelstärke, Kartoffelmehl, Kartoffelflocken, Kartoffelschälabfälle oder ganze Kartoffeln, Getreidemehl und Getreidenachprodukte, wie von Reis, Mais, Gerste, Weizen, Hafer, Roggen, Hirse, Brotabfälle bzw. Knäckebrotbruch, Cellulosen, wie Cellulose und Hemicellulosen, zugegeben. Beispiele für Gummen, die auch teilweise als Harze bezeichnet werden, sind Gummiarabikum, Kirschgummi, Gummi Acaroides, Gummi Asa goetida, G. Benzoe Siam, G. Copal, G. Elemi, G. Galbanum, G. Guajaci, G. Gutti, G. Kino, G. Mastix, G. Myrrhae, G. Olibanum, G. Opoponax, G. Sandaracae, G. Sanguis Draconis und G. Styrax.

Die Kohlenhydrate und/oder Gummen werden in einer Menge von 0 bis 15 Gew.Teilen, bevorzugt 3 bis 8 Gew.Teilen, als Trockenmasse, bezogen auf 100 Gew.Teile Trockenmasse, verwendet.

Verwendet man bei dem erfindungsgemäßen Verfahren Kohlenhydrate und/oder Gummen, so gibt man die Kohlenhydrate bzw. Gummen zu, nachdem sich der pH-Wert des Gemisches aus Milchnebenprodukt und Flugasche auf einen konstanten Wert eingestellt hat. Die Kohlenhydrate und Gummen müssen bei einer Reaktionstemperatur innerhalb des oben angegebenen Bereichs und unter Rühren zugegeben werden.

Enthält das erfindungsgemäße Konzentrat Kohlenhydrate, so zeigt es keine Hygroskopizität mehr und läßt sich während langer Zeiten unbedenklich lagern.

Dabei ist es angezeigt, bei Anwendung von Trockentechnik über das Sprühverfahren (Turm) die geringeren Anteile und bei Walzen die höheren Anteile zu bevorzugen.

Die erfindungsgemäßen Produkte können mit vorhandenen Techniken von Milchwerken auf befriedigende Weise hergestelltwerden. Sollen große Mengen an erfindungsgemäßem Produkt mit hoher Wirtschaftlichkeit hergestellt werden, so muß man auf einer speziell hergerichteten Walze trocknen.

Dabei setzt man die Trockenmasse aus dem Gemenge Milchnebenprodukt, Pflanzenasche und Kohlenhydrate so hoch, daß im Naßgut vor der Trocknung über 50 % Trockensubstanz erreicht werden. Das nach der üblichen Reaktionszeit und nach der Zugabe von Kohlenhydrat entstehende, fast plastische Naßgut wird über eine Dickstoffpumpe und eine Linearauftragung auf eine Walze beaufschlagt, die auf ihrem Trocknungszylinder mehrere Auftragswalzen angeordnet hat, die jede für sich mit einem Naßgutstrom versorgt werden. Es kann so ein dicker Belag aufgetragen werden. Dies geschieht grundsätzlich vom Mittelpunkt der Trockenwalze aus, gesehen vertikal von oben. Dabei ist das Messer so angeordnet, daß es vom Walzenmittelpunkt aus gesehen vertikal darunter, entweder horizontal seitlich oder in der Nähe des unteren Punktes, angeordnet ist und damit den kompakten Film gut entfernen kann.

Das abgehende Trockengut kann anschließend in an sich bekannter Weise zerkleinert, granuliert oder in einer Mühle fein gemahlen werden.

Verwendet man bei dem erfindungsgemäßen Verfahren ein Milchnachprodukt, Pflanzenasche und Kohlenhydrate und/oder Gummen, so erhält man vorzugsweise Produkte, die als Halbfabrikate besonders geeignet sind, die Spurenelementversorgung von Mensch und Tier sicherzustellen.

Geht man davon aus, daß leistungsbezogene Tierrationen spezielle, quantitativ höhere Zusätze an einzelnen Spurenelementen benötigen, als sie durch die Pflanzenasche erbracht werden können, so wird es notwendig, diese einzelnen Spurenelemente in Form von chemischen Salzen gezielt zuzufügen.

Innerhalb der Reaktionszeit zwischen Milchnachprodukt und Pflanzenasche und vor der Zugabe von Kohlenhydraten werden ein oder mehrere Spurenelemente zugegeben. Das Spurenelement kann in Form eines Salzes, Oxids oder Hydroxids zugegeben werden. Selbstverständlich kann man auch Gemische von unterschiedlichen Salzen oder einem Oxid eines Spurenelements oder ähnlichen Verbindungen oder Gemische von Salzen, Oxiden oder Hydroxiden oder ähnlichen Verbindungen verschiedener Spurenelemente verwenden.

Bei dem erfindungsgemäßen Verfahren können zusätzlich zu den Spurenelementmischungen auch Mineralien wie alle handelsüblichen Mineralstoffkomponenten, z. B. Calciumcarbonat, Dicalciumcarbonat und dgl. mitverwendet werden. (vgl. auch hinsichtlich der Mineralstoffe « Handbuch der Futtermittel » M. Becker, K. Nehring, Verl. P. Parey, Hamburg u. Berlin 1967, 3. Band, S. 312).

Will man beispielsweise Konzentrate herstellen, die für Schweine geeignet sind, so sollten solche Konzentrate größere Mengen an Kupfersulfat enthalten, so daß im Schweinemastfutter über das verfahrensgemäße Halbfabrikat als Anteil einer Dosierung von gezielt ca. 125 ppm Kupfer in Form von Sulfat erreicht werden kann. Ähnliche Produkte sind z. B. geeignet für Putenküken, Legehennen oder Mastbroiler, für Schafe und Rinder, die Vormischungen anderer, speziell dosierter Spurenelemente verlangen.

Produkte, die man erhält, indem man zusätzlich Spurenelemente zugibt, sind auch für die Versorgung mit Makromineralien von Mensch und Tier geeignet.

Erfindungsgemäße Gemische, die in Pulverform vorliegen und zusätzlich zu den aus der i lugasche stammenden Spurenelementen noch zusätzliche Spurenelementsalze enthalten, können überall dort zweckmäßig sein, wo bei speziellen Vormischungen für bestimmte Tierarten und Leistungsgruppen erhebliche Hochdosierungen bestimmter Spurenelemente und Spurenelementverbindungen erforderlich sind, z. B. für Milchvieh, Schafe, Legehennen, Puten. Insbesondere bei Mastschweinen, wo bekannt ist, daß in der Ration 135 bis 250 ppm Kupfersulfat eine verbesserte Eiweißverwertung ergeben können, andererseits auch im Fall menschlicher Ernährung, wenn bestimmte Zwecke vorliegen.

Die erfindungsgemäßen Konzentrate können selbstverständlich übliche Zusatzstoffe, wie Vitamine, Konservierungsmittel oder Antibiotika, Fermente, Hormone, Pharmazeutika usw., enthalten (vergl. das Kapitel Futtermittel in Band 12 von Ullmanns Enzyklopädie der Technischen Chemie, Seite 41, 1976).

Ein bevorzugtes erfindungsgemäßes Futtermittel enthält, bezogen auf 100 Gew.Teile Trockenmasse :

20 bis 75 Gew.Teile Trockensubstanz, die aus einem flüssigen Nachprodukt der Milchverarbeitung mit einem Gehalt von über 9 % Asche in der Trockensubstanz stammt,

8 bis 55 Gew.Teile Pflanzenasche und/oder anorganische Bestandteile enthaltende Kohlerückstände,

0 bis 25 Gew.Teile Spurenelementmischung,

0 bis 70 Gew.Teile Mineralstoffe und

0 bis 15 Gew.Teile Kohlenhydrate und/oder Gummen.

Im folgenden wird der Gehalt eines erfindungsgemäßen Konzentrats an den verschiedenen Spurenelementen sowie der Inhaltsstoffe aufgeführt.

Es wurde eine bevorzugtes erfindungsgemäßes Konzentrat aus 50 % Trockensubstanz, die aus Molkeneiweißkonzentrat stammt, und 50 % Trockensubstanz, die aus Flugasche stammt, hergestellt.

Die Zusammensetzung des Konzentrats ist wie folgt.

Zusammensetzung des Konzentrats

| | | |
|---|---|---|
| Molkeneiweißkonzentrat | 50 % TS | 48-49 % Prod. |
| Flugasche | 50 % TS | 48-49 % Prod. |
| | | 4,2 % Restfeuchte |
| Endprodukt | 100 % TS | 100 % |

TS = Trockensubstanz.

Inhaltsstoffe (berechnet)

| | % in dem Produkt |
|---|---|
| Roheiweiß/Protein | 10-11 |
| Milchzucker/Lactose | 20-25 |
| Milchmineral | 12-15 |
| Pulverige Flugasche | 47-49 |

(Siehe Tabelle Seite 9 f.)

Inhaltsstoffe (berechnet)

| | % in dem Produkt | ppm aus d. Molke | ppm aus d. Flugasche | | ppm im Produkt |
|---|---|---|---|---|---|
| Calcium | 3 -4 | | | | |
| Kalium | 6 -7 | | | | |
| Natrium | 2 -2,5 | | | | |
| Magnesium | 0,5-0,6 | | | | |
| Phosphor | 0,8-0,9 | | | | |
| Schwefel | | 2 000 | 2 000 | = | 4 000 |
| Silicium | | 54 | 95 000 | = | 95 000 |
| Aluminium | | 8 | 20 000 | = | 20 000 |
| Titan | | ? | 800 | = | 800 |
| Vanadium | | ? | 25 | = | 25 |
| Chrom | | 110 | 55 | = | 150 |
| Mangan | | 0,7 | 200 | = | 200 |
| Eisen | | 5 | 7 500 | = | 7 500 |
| Kobalt | | 10 | 3 | = | 13 |
| Nickel | | 20 | 25 | = | 45 |
| Kupfer | | 1,5 | 100 | = | 100 |
| Zink | | 28 | 130 | = | 150 |
| Arsen | | | 22 | = | 11 |
| Selen | | | 0,2 | = | 0,2 |
| Brom | | | 0,3 | = | 0,3 |
| Molybdän | | 0,5 | 18 | = | 18 |
| Lanthanide | | ? | 140 | = | 140 |

Das Produkt ist ein dunkelgrau verteiltes, feines Pulver, das beim Spraytrocknen erhalten wird.

Das beschriebene Verfahren führt zu völlig neuartigen, bisher nicht üblichen Kombinationsprodukten aus

(a) Pflanzenasche als einem Träger vielseitiger Spurenelemente ;

(b) Milchnebenprodukten, die gekennzeichnet sind durch ihren sauren pH und einen Mineralanteil, der über dem üblichen Anteil, z. B. von Magermilch mit 7 % Asche in Trockensubstanz oder Molken mit 8 bis 9 % Asche in Trockensubstanz, liegt ;

(c) Gegebenenfalls zusätzlich beigegebenen Spurenelementsalzen und/oder Mineralkomponenten zur zweckmäßigen Ergänzung und Erweiterung der Inhaltsstoffe aus (a) und (b) ; und

(d) Kohlenhydraten als technischem Hilfsmittel zur Verringerung einer geringen, aber möglichen Hygroskopizität bei langer Lagerung.

Im Tierversuch erwiesen sich die Produkte als erfolgreich und geeignet, bisher mögliche Mangelerscheinungen, insbesondere bei Fruchtbarkeitsstörungen, Avitalität von Jungtieren, unsymptomatischen Durchfällen und allgemeinen, nicht definierbaren Depressionen in Wachstum und Verwertung hochleistender Tiere auszuschalten.

In der menschlichen Ernährung bieten sich die Produkte dort an, wo zu stark vereinseitigte Ernährung und Überernährung zu Zivilisationskrankheiten führen, die sich auf unaufklärbare Mangelsituationen zurückführen lassen und daher einer Vervollständigung der Kost durch Spurenstoffe und Resorptionsförderfaktoren bedürfen.

Die folgenden Beispiele erläutern die Erfindung.

Beispiel 1

Im folgenden werden die Bestandteile so eingesetzt, daß 100 kg Trockensubstanz (TS) erhalten werden.

| Prozeß | TS-kg | Produkt/Rohstoff | Masse-kg |
|--------|-------|------------------|----------|
| Vorlage | 46 | Milchnachprodukt, eingedickt, Ø 35 %ig | 131,43 |
| Zusatz | 46 | Pflanzenasche, pulverig | 48,42 |
| Homogene Vermengung, Reaktionszeit pH-kontrolliert ablaufen lassen | | | |
| Zusatz | 8 | Kartoffelflocken als Kohlenhydrate | 8,89 |
| | 100 | Gemenge = Naßgut | 188,74 |
| | | Trockenmasse/Naßgut = 53 % | |

anschließende Endtrocknung (Walze/Turm), gegebenenfalls Feinstvermahlung.

Bei der Trocknung über bisher übliche milchtechnische Trocknungsgeräte zeigt sich, daß das erfindungsgemäß hergestellte Gemenge gegenüber der Trocknung der Milchnachprodukte allein mit höherer Leistung abläuft, auch dann, wenn man die Leistung lediglich auf die durchgesetzten Milchanteile bezieht.

Auf dem Turm wird die milchproduktbezogene Durchsatzleistung um rund 10 bis 15 % in der Einheit verbessert, ein überraschender Effekt, der sich wirtschaftlich und energiemäßig positiv auswirkt.

Wird dagegen die beschriebene, spezielle Walzeneinrichtung genutzt, so zeigt sich eine extreme Leistungssteigerung um über 50 %, bezogen auf die durchgesetzte Milchproduktmenge (kg/m$^2$/h), so daß ein besonders wirtschaftlicher und energiesparender Effekt deutlich wird.

Beispiel 2

Die eingesetzten Mengen beziehen sich jeweils auf 100 kg Trockensubstanz.

| Prozeß | TS-kg | Produkt/Rohstoff | Masse-kg |
|--------|-------|------------------|----------|
| Vorlage | 46 | Milchnachprodukt, eingedickt, Ø 35 %ig | 131,42 |
| Zusatz | 25 | Pflanzenasche, pulverig | 26,32 |
| später | 21 | Spurenelementsalze | 23,33 |
| Homogene Vermengung, Reaktionszeit pH-kontrolliert ablaufen lassen | | | |
| Zusatz | 8 | Weizenmehl | 8,89 |
| | 100 | Gemenge = Naßgut | 189,96 |
| | | Trockenmasse/Naßgut = 53 % | |

Der nachfolgende technische Prozeß verläuft analog zu Beispiel 1. Es wird eine Spurenelement-Vormischung erhalten, die neben dem Breitspektrum von Spurenelementen aus Pflanzenasche definierte Dosierungen eines einzelnen oder mehrerer Spurenelement enthält.

Beispiel 3

Die eingesetzten Mengen beziehen sich jeweils auf 100 kg Trockensubstanz.

| Prozeß | TS-kg | Produkt/Rohstoff | Masse-kg |
|--------|-------|------------------|----------|
| Vorlage | 46 | Milchprodukt, eingedickt, Ø 35 %ig | 131,43 |
| Zusatz | 46 | Pflanzenasche, pulverig oder Pflanzenasche und Spurenelementsalz sauer löslich (nach Beispiel 2) | 48,42 |
| Homogene Vermengung, Reaktionszeit pH-kontrolliert ablaufen lassen | | | |
| Zusatz | 8 | Tapioka | 8,89 |
| | 100 | Gesamtmenge = Naßgut | 188,74 |
| | | Trockenmasse/Naßgut = 53 % | |

Beispiel 4

Man arbeitet wie in Beispiel 1 beschrieben, stellt jedoch 1 000 kg Trockensubstanz her.

0 052 152

| Prozeß | TS-kg | Produkt/Rohstoff | Masse-kg |
|---|---|---|---|
| Vorlage 1 | 100 | | 188,74 |
| Zusatz | 400 | Milchprodukt, eingedickt, Ø 35 %ig | 1 142,86 |
| Zusatz | 500 | Minerale, Komponenten, pulverig | |
| | | Na und/oder Ca und/oder Mg-Phosphat | |
| | | K und/oder Ca-Carbonat | |
| | | Ca und/oder Mg-Oxid | |
| | | Ca und/oder Mg-Chlorid | 555,56 |
| Homogene Vermengung, Reaktionszeit pH-kontrolliert ablaufen lassen | | | |
| | 1 000 | Gemenge = Naßgut | 1 887,16 |
| | | Trockenmasse/Naßgut = 53 % | |

Der nachfolgende Prozeß der Trocknung, gegebenenfalls Vermahlung nach Trocknung, verläuft analog zu Beispiel 1. Es wird eine Spurenelementmischung in trockener Form erhalten, die neben dem Breitspektrum von Spurenelementen aus Pflanzenasche definierte Dosierungen eines einzelnen oder mehrerer Spurenelementsalze enthält.

Beispiel 5

Die eingesetzten Mengen beziehen sich jeweils auf 100 kg Trockensubstanz.

| Prozeß | TS-kg | Produkt/Rohstoff | Masse-kg |
|---|---|---|---|
| Vorlage | 40 | Milchprodukt, eingedickt, Ø 35 %ig | 114,29 |
| Zusatz A | 8 | Pflanzenasche, pulverig oder Pflanzenasche + Spurenelementsalze | 8,89 |
| Homogene Vermengung, jedoch kurze Reaktionszeit | | | |
| Zusatz B | 50 | Mineralkomponenten, trocken, feinvermahlen | 55,55 |
| Homogene Vermengung, Reaktionszeit pH-kontrolliert ablaufen lassen | | | |
| Zusatz C | 2 | Guargummi | 2,10 |
| | 100 | Gemenge = Naßgut | 180,63 |
| | | Trockenmasse/Naßgut = 55-56 % | |

Auch dieses Naßgut kann über traditionelle Milchtrockner, Turm und Walze mit großem Vorteil getrocknet werden. Über dem Turm entstehen staubförmige Endprodukte, die als Mineral- und Spurenelementvormischungen, mit Spurenelementbreitspektrum durch Pflanzenasche, als Gemengteil in menschliche und tierische Ernährungsprodukte eingeführt werden können.

Über der Walze entsteht zunächst bei Abgang am Messer, insbesondere bei dem erwähnten verbesserten Walzentyp, ein kompakter Film. Er wird in diesem Falle zweckmäßigerweise nicht vermahlen, sondern in Flockenform und als ergänzendes Produkt zur Versorgung von Mensch und Tier, ergänzend zur übrigen Nahrung, verabreicht.

**Ansprüche**

1. Verfahren zur Herstellung eines für Menschen und Tiere geeigneten, Spurenelemente enthaltenden Konzentrats, dadurch gekennzeichnet, daß man zu sauren, flüssigen Nachprodukten der Milchverarbeitung mit einem Gehalt von über 9 % Asche in der Trockensubstanz und einem pH-Wert unter 5,5 Pflanzenasche und/oder anorganische Bestandteile enthaltende Kohlerückstände in einer Menge zusetzt, die ausreicht, den pH-Wert auf einen Wert über 6 zu erhöhen, gegebenenfalls Spurenelemente und/oder Mineralstoffe zusetzt, das angereicherte, flüssige oder pastenförmige Produkt trocknet und gegebenenfalls mahlt oder granuliert.

2. Verfahren nach Anspruch 1, dadurch gekennzeichnet, daß man nach der Erhöhung des pH-Wertes Kohlenhydrate und/oder Gummen zu dem Reaktionsgemisch zugibt.

3. Verfahren nach einem der Ansprüche 1 oder 2, dadurch gekennzeichnet, daß man als Kohlenhydrate Kartoffelprodukte, Getreidemehle und/oder Cellulosen verwendet.

4. Verfahren nach einem der Ansprüche 1, 2 oder 3, dadurch gekennzeichnet, daß man die Umsetzung bei einer Temperatur im Bereich von 10 bis 50 °C durchführt.

5. Verfahren nach einem der vorhergehenden Ansprüche, dadurch gekennzeichnet, daß man

11

**0 052 152**

20 bis 75 Gew.Teile Trockensubstanz, die aus dem flüssigen Nachprodukt der Milchverarbeitung mit einem Gehalt von über 9 % Asche in der Trockensubstanz stammt,

8 bis 55 Gew.Teile Pflanzenasche und/oder anorganische Bestandteile enthaltende Kohlerückstände als Trockenmasse,

0 bis 25 Gew.Teile Spurenelementmischung,

0 bis 70 Gew.Teile Mineralstoff und

0 bis 15 Gew.Teile Kohlenhydrate und/oder Gummen als Trockenmasse, bezogen auf 100 Gew.-Teile Trockenmasse des Konzentrats,

verwendet.

6. Konzentrat, dadurch gekennzeichnet, daß es nach einem Verfahren der Ansprüche 1 bis 6 erhalten worden ist.

7. Für Menschen und Tiere geeignetes, Spurenelemente enthaltendes Konzentrat, dadurch gekennzeichnet, daß es, bezogen auf die Trockenmasse,

20 bis 75 Gew.Teile Trockensubstanz, die aus einem flüssigen Nachprodukt der Milchverarbeitung mit einem Gehalt von über 9 % Asche in der Trockensubstanz stammt,

8 bis 55 Gew.Teile Pflanzenasche und/oder anorganische Bestandteile enthaltende Kohlerückstände,

0 bis 25 Gew.Teile Spurenelementmischung,

0 bis 70 Gew.Teile Mineralstoffe und

0 bis 15 Gew.Teile Kohlenhydrate und/oder Gummen

enthält.

8. Verwendung des Konzentrats nach Anspruch 7 oder 8 als Nahrungs- oder Futtermittel oder als Ergänzung für Nahrungs- und Futtermittel.

**Claims**

1. A process for the production of a concentrate containing trace elements suitable for human beings and animals, characterized in that carbon residues containing plant ashes and/or inorganic constituents are added to acidic, liquid by-products from the processing of milk having an ash content in the dry matter of more than 9 % and a pH-value below 5.5 in a quantity sufficient to increase the pH-value to above 6, trace elements and/or minerals are optionally added, the enriched liquid or paste-form product is dried and, optionally, ground or granulated.

2. A process as claimed in Claim 1, characterized in that carbohydrates and/or gums are added to the reaction mixture after the pH-value has been increased.

3. A process as claimed in Claim 1 or 2, characterized in that potato products, ground cereals and/or celluloses are used as the carbohydrates.

4. A process as claimed in Claim 1, 2 or 3, characterized in that the reaction is carried out at a temperature in the range from 10 to 50 °C.

5. A process as claimed in any of the preceding Claims, characterized in that

from 20 to 75 parts by weight of dry matter emanating from the liquid milk by-product with an ash content of more than 9 % in the dry matter,

from 8 to 55 parts by weight of carbon residues containing plant ashes and/or inorganic constituents as dry matter,

from 0 to 25 parts by weight of trace element mixture,

from 0 to 70 parts by weight of minerals and

from 0 to 15 parts by weight of carbohydrates and/or gums as dry matter, based on 100 parts by weight of concentrate dry matter,

are used.

6. A concentrate obtained by the process claimed in Claims 1 to 6.

7. A concentrate containing trace elements suitable for human beings and animals, characterized in that, based on dry matter, it contains

from 20 to 75 parts by weight of dry matter emanating from a liquid by-product from the processing of milk with an ash content of more than 9 % in the dry matter,

from 8 to 55 parts by weight of carbon residues containing plant ashes and/or inorganic constituents,

from 0 to 25 parts by weight of trace element mixture,

from 0 to 70 parts by weight of minerals and

from 0 to 15 parts by weight of carbohydrates and/or gums.

12

**0 052 152**

8. The use of the concentrate claimed in Claim 7 or 8 as a food or feed or as a food or feed supplement.

**Revendications**

1. Procédé d'obtention d'un concentré contenant des oligo-éléments approprié à l'homme et aux animaux, caractérisé en ce que l'on ajoute à des liquides acides, sous-produits de la transformation du lait ayant une teneur en cendres de plus de 9 % sur l'extrait sec et un pH inférieur à 5,5, de la cendre végétale et/ou des résidus de charbon contenant des constituants minéraux, en quantité suffisante pour élever le pH à un niveau supérieur à 6, en ce que l'on ajoute éventuellement des oligo-éléments et/ou des matières minérales, en ce que l'on sèche le produit enrichi liquide ou pâteux et qu'éventuellement on le broie ou le granule.

2. Procédé selon la revendication 1, caractérisé par le fait qu'après l'élévation du pH, on ajoute au mélange réactionnel des hydrates de carbone et/ou des gommes.

3. Procédé selon l'une des revendications 1 et 2, caractérisé par le fait que comme hydrates de carbone, on utilise des produits de pomme de terre, des farines de céréales et/ou des celluloses.

4. Procédé selon les revendications 1, 2 et 3, caractérisé par le fait que l'on conduit la réaction à une température comprise entre 10 et 50 °C.

5. Procédé selon l'une quelconque des revendications précédentes, caractérisé par le fait que l'on utilise :

20 à 75 parties en poids de substance sèche qui provient du sous-produit liquide de la transformation du lait ayant une teneur en cendres de plus de 9 % sur l'extrait sec,

8 à 55 parties en poids de cendre végétale et/ou de résidus de charbon contenant des constituants minéraux, sous forme de masse sèche,

0 à 25 parties en poids de mélange d'oligo-éléments,

0 à 70 parties en poids de matière minérale et

0 à 15 parties en poids d'hydrates de carbone et/ou de gommes, sous forme de masse sèche, par 100 parties en poids de masse sèche du concentré.

6. Concentré caractérisé par le fait qu'il a été obtenu selon le procédé selon les revendications 1 à 6.

7. Concentré contenant des oligo-éléments approprié à l'homme et aux animaux, caractérisé en ce qu'il contient, par rapport à la masse sèche :

20 à 75 parties en poids de substance sèche qui provient d'un sous-produit liquide de la transformation du lait ayant une teneur en cendres de plus de 9 % sur l'extrait sec,

8 à 55 parties en poids de cendre végétale et/ou de résidus de charbon contenant des constituants minéraux,

0 à 25 parties en poids de mélange d'oligo-éléments,

0 à 70 parties en poids de matières minérales et

0 à 15 parties en poids d'hydrates de carbone et/ou de gommes.

8. Utilisation du concentré selon l'une des revendications 7 et 8 comme aliment ou fourrage ou comme complément pour aliments et fourrages.

13